# EUROPEAN PATENT SPECIFICATION

(11) **EP 4 155 779 B1**
(45) Date of publication and mention of the grant of the patent: **08.01.2025**
(21) Application number: 21908686.5
(22) Date of filing: 23.09.2021
(51) Int. Cl.: G01S 19/37, B61L 25/02

(54) **LOCOMOTIVE RUNNING STATE DETECTION METHOD BASED ON SATELLITE POSITIONING**
VERFAHREN ZUR ERKENNUNG DES BETRIEBSZUSTANDES EINER LOKOMOTIVE AUF DER BASIS VON SATELLITENPOSITIONIERUNG
PROCÉDÉ DE DÉTECTION DE L'ÉTAT DE FONCTIONNEMENT D'UNE LOCOMOTIVE SUR LA BASE D'UN POSITIONNEMENT PAR SATELLITE

(30) Priority: 22.12.2020 CN 202011533285
(43) Date of publication of application: 29.03.2023
(73) Proprietor: CASCO SIGNAL LTD., Shanghai 200071 (CN)
(72) Inventor: HAN, Ge'er, Shanghai 200071 (CN); CHENG, Jiajia, Shanghai 200071 (CN); JIA, Qingwen, Shanghai 200071 (CN); WANG, Shijing, Shanghai 200071 (CN); LUO, Yina, Shanghai 200071 (CN); WANG, Ping, Shanghai 200071 (CN)
(74) Representative: Sun, Yiming
(86) International application number: PCT/CN2021/119763
(87) International publication number: WO 2022/134685

(56) References cited:
- WO-A1-2017/020667
- CN-A- 101 210 960
- CN-A- 107 923 981
- CN-A- 109 849 978
- CN-A- 110 914 710
- CN-A- 111 913 419
- CN-A- 111 913 419
- CN-A- 112 578 420
- KR-B1- 101 255 013
- US-A1- 2011 285 583

## Description

### FIELD OF TECHNOLOGY

The invention relates to a locomotive operation state detection method, in particular to a locomotive operation state detection method based on satellite positioning.

### BACKGROUND

The locomotive operation speed, direction and displacement are indispensable key information for realizing safety early-warning and protection of locomotive operation. There are mature and reliable methods for calculating these information quantities on a locomotive, for example, speed information is acquired by means of a speed sensor of the locomotive, the operation direction is determined by acquiring a handle position of the locomotive, and the displacement is calculated by combining the speed, direction, wheel diameter and sensor information. However, with the increasing standardization, modularization and function intensification of the locomotive design, each functional unit is a separate system, and after the locomotive is put into operation, if new equipment is added, it is difficult to acquire the information. On one hand, actual interfaces on the locomotive that may be used to acquire the information are near saturation, even if they can be added, the construction difficulty and cost are very high; and on the other hand, some public platforms on the locomotive can release the information, but it is generally difficult for unimportant equipment to access the platforms with the permission of platform maintenance parties and equipment owners, even if the equipment can access the platforms, the interface cost also exists, and operation and maintenance of subsequent products may also involve other units.

Satellite positioning and navigation systems mainly include GPS, Beidou, GLONASS, Galileo and the like. In recent years, the Beidou navigation satellite system has been increasingly improved, the satellite positioning technology has been continuously developed, and the accuracy and stability of satellite positioning have been greatly improved. With the completion of the Beidou high-accuracy ground-based augmentation network, the satellite positioning accuracy will reach the centimeter level. Therefore, how to apply the satellite positioning to detection of the locomotive operation state so as to improve the detection accuracy and reduce the cost has become a technical problem to be solved. WO 2017/020667 A1 discloses a method and system for precisely locating a locomotive using LKJ position data. CN 111 913 419 A discloses a safety monitoring system and method for a molten iron transport locomotive.

### SUMMARY

The present invention aims to overcome the above defects of the prior art to provide a locomotive operation state detection method based on satellite positioning that is low in cost, high in adaptability and convenient to operate and maintain.

The present invention is defined by the independent claim. Advantageous embodiments are described in the dependent claims, the following description and the drawings. Inter alia, the purpose of the present invention can be achieved through the following technical solution:
according to one aspect of the invention, the locomotive operation state detection method based on satellite positioning is provided, the method comprising installing a satellite positioning module on a locomotive, and acquiring real-time position information, speed information and direction angle information of the locomotive by analyzing satellite positioning data output by the satellite positioning module; and dividing locomotive operation states into an initial state, an invalid satellite positioning state, a low speed state and a credible speed state according to whether the positioning data is valid and according to a received speed value.

As the preferred technical solution, in the initial state, a locomotive speed, an operation direction and a displacement value are all unknown, and the displacement value is taken as 0.

According to present invention, the credible speed state is a case when the satellite positioning is valid and the locomotive speed is not lower than a critical speed.

According to present invention, in the credible speed state, the speed information of the locomotive is taken from the satellite positioning data, the direction information of the locomotive is acquired through direction calculation A, and displacement information of the locomotive is acquired through displacement calculation A.

As the preferred technical solution, the specific process of the direction calculation A comprises:
acquiring the direction angle information of locomotive movement by analyzing the satellite positioning data, determining direction angle intervals in up and down directions within a set position range according to actual line and station conditions, and determining the up and down directions, in which the locomotive operates currently, by judging the interval where the direction angle is located.

As the preferred technical solution, the specific process of the displacement calculation A comprises:
determining one locomotive operation direction as a positive displacement direction and another locomotive operation direction as a negative direction, calculating a displacement change △s=v×△t in a single cycle, and in combination with the locomotive operation direction, acquiring a displacement by adding or subtracting on the basis of an original displacement, where v is the locomotive speed and △t is the single cycle.

According to present invention, in the low speed state, the speed value in this state is taken as a reference, and the operation direction and displacement of the locomotive are calculated by means of the position change, the operation direction is acquired through direction calculation B, and the displacement is acquired through displacement calculation B.

According to present invention, the specific process of the direction calculation B comprises:
calculating the direction angle according to the position change; setting a linear distance Δd, the current position (longitude and latitude) being pos, POS₀ representing the position (longitude and latitude) information to be compared, an initial value being a position at the time when entering the low speed state, calculating a distance between the current pos and POS₀ in real time, when the distance at the first time is larger than or equal to △d, calculating the true north direction angle of the current pos with respect to POS₀, and using the direction angle as an input to acquire the up and down results by means of the direction calculation method A; at the same time, taking the current pos as new POS₀, and repeating the above calculation circularly; and
when the up and down results of three consecutive △d are the same, determining that it is the current locomotive operation direction, and keeping the original operation direction unchanged in other cases.

Alternatively, in an embodiment not falling under the scope of protection, the specific process of the displacement calculation B comprises:
calculating a distance Δs between the current pos and POS₀ in real time, at the same time, calculating the true north direction angle of the current pos with respect to POS₀, using the direction angle as an input to acquire the up and down results by means of the direction calculation method A, and acquiring the displacement by adding or subtracting on the basis of original S₀ according to the direction.

As the preferred technical solution, when the satellite positioning state is changed from a normal state to an invalid state, the invalid satellite positioning state may be enabled, and in this state, the speed is unknown, and the direction and displacement remain the last valid values.

Compared with the prior art, the present invention has the following advantages:
(1) according to the present disclosure, the satellite positioning module is introduced into locomotive equipment, interfacing with an existing locomotive system is not needed, the speed, the operation direction and the displacement of the locomotive are determined and calculated by means of the satellite positioning information only, the independence is high, the adaptability is high, the interface cost is saved, and the later operation and maintenance consumption is reduced;
(2) the line data required by the present disclosure is simple, and the determination of the speed, the displacement and the up and down directions of the locomotive does not need to be supported by a large number of line longitude and latitude data, thereby avoiding the cost of line data making; and
(3) with the improvement of the accuracy and the stability of the satellite positioning, the present disclosure can be used as a new supplement to existing traditional speed and distance measurement methods in the locomotive system, and more accurate results can be acquired by comprehensively calculating these indicators.

### BRIEF DESCRIPTION OF THE DRAWINGS

FIG. 1 is a schematic diagram of locomotive states of the present invention;
FIG. 2 is a schematic diagram of the locomotive operation speed in an embodiment of the present invention;
FIG. 3 is a schematic diagram of locomotive operation direction determination in the embodiment of the present invention; and
FIG. 4 is a schematic diagram of locomotive movement positions of in the embodiment the present invention.

### DETAILED DESCRIPTION OF THE EMBODIMENTS

The technical solution in an embodiment of the present invention will be described clearly and completely below in conjunction with the accompanying drawings in the embodiment of the present invention.

Satellite positioning and navigation systems mainly include GPS, Beidou, GLONASS, Galileo and the like. In recent years, the Beidou navigation satellite system has been increasingly improved, the satellite positioning technology has been continuously developed, and the accuracy and stability of satellite positioning have been greatly improved. With the completion of the Beidou high-accuracy ground-based augmentation network, the satellite positioning accuracy will reach the centimeter level.

The improvement of the accuracy and stability of the satellite positioning also indirectly improves the accuracy of locomotive speed and position measurement based on the satellite positioning. The invention provides a locomotive operation speed, direction and displacement determination method based on satellite positioning, which is used as an acquisition method other than a method for acquisition from a locomotive system and has the advantages of low cost, high adaptability and convenience in operation and maintenance.

In the present disclosure, the locomotive operation direction refers to the up and down directions; the locomotive operation displacement is slightly different from the displacement in traditional physics and also includes a curve between two points here; and the locomotive speed is the speed that we know.

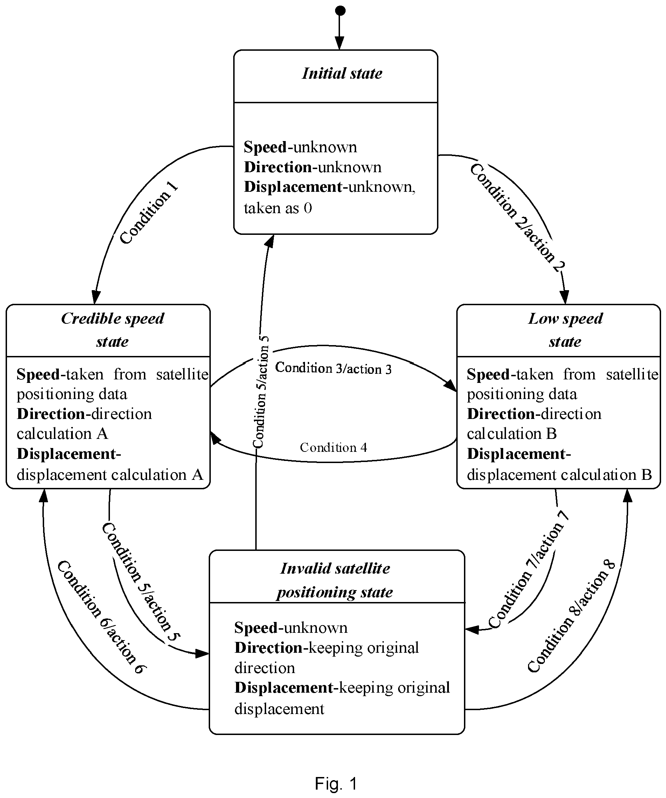

A locomotive is provided with a satellite positioning module, and real-time position information, speed information and direction angle information of the locomotive can be acquired by analyzing satellite positioning data output by the satellite positioning module. Whether the satellite data is valid can be controlled according to the positioning satellite search number, the horizontal dilution of precision (HDOP) and other values. According to whether the positioning data is valid and according to a received speed value, there are four states, including an initial state, an invalid satellite positioning state, a low speed state and a credible speed state. The states and the jump relationships between the states are shown in FIG. 1:
in the initial state, the locomotive speed, the operation direction and a displacement value are all unknown, and the displacement value is taken as 0; the credible speed state is a case when the satellite positioning is valid and the locomotive speed is not lower than a critical speed, when the locomotive has a certain speed, compared with the low speed state, the locomotive position changes greatly, the satellite positioning accuracy has a small impact on the speed and the direction angle, the speed value is credible, the operation direction can be calculated by means of the real-time direction angle information, and the displacement is calculated by combining the speed and the direction;
in the low speed state, the locomotive position has a small change, the satellite positioning accuracy has a large impact on the speed and the direction angle, the speed value in this state is used as a reference, and the operation direction and the displacement are calculated by means of the position change; and
when the satellite positioning state is changed from a normal state to an invalid state, the invalid satellite positioning state may be enabled, in this state, the speed, direction and displacement information cannot be acquired by means of the satellite positioning information, at this moment, the speed is unknown, the direction and the displacement remain the last valid values, and if the satellite positioning cannot be restored within the specified time, the satellite positioning state returns to the initial state.

The locomotive speed is set as v, the displacement is set as s, the direction is set as dir, the position information (longitude and latitude) is set as pos, the critical speed of the jump between the credible speed state and the low speed state is set as V_{b}, and the longest duration of the invalid satellite positioning state is set as T_{c}. Conditions of the jump between the states and actions during the jump, which are shown in FIG. 1, are defined as follows:
Conditions 1/4: the satellite positioning is valid, and the speed v≥V_{b};
Conditions 2/3: the satellite positioning is valid, and the speed v<V_{b};
Conditions 5/7: the satellite positioning is invalid;
Condition 6: the duration t<T_{c} in the invalid satellite positioning state, the satellite positioning is valid, and the speed v≥V_{b};
Action 2: the displacement S₀ during the jump is recorded as 0, the up and down directions DIR₀ are unknown, and the position information (longitude and latitude) is POS₀;
Action 3: the displacement S₀, the up and down directions DIR₀ and the position information (longitude and latitude) POS₀ during the jump are recorded;
Actions 5/7: the displacement S₀ and the position information (longitude and latitude) POS₀ during the jump are recorded;
Action 6: a displacement calculation method B is used to update the displacement s; and
Action 8: the displacement calculation method B is used to update the displacement s, the displacement is recorded as S₀, and meanwhile, the up and down directions DIR₀ and the position information (longitude and latitude) POS₀ during the current jump are recorded.

The specific calculation methods for the locomotive speed, direction and displacement are introduced below.

The locomotive speed value in this solution is taken from the satellite positioning data. The speed information (in knot) can be directly solved from a satellite positioning data package and multiplied by 1.852 to be converted into the speed in km/h.

Different calculation methods are used for calculation of the locomotive operation direction in the different states.

The direction calculation method A in FIG. 1 is as follows: the direction angle information of locomotive movement, that is, the angle relative to the true north direction can be acquired by analyzing the satellite positioning data. Direction angle intervals in up and down directions within a specific position range can be determined according to actual line and station conditions, and the information is fixed line information. The up and down directions, in which the locomotive operates currently, can be determined by judging the interval where the direction angle is located.

The direction calculation method B in FIG. 1 is as follows: the method is applicable to the low speed condition, and under the low speed condition, the direction angle accuracy of the satellite positioning is low and therefore should not be used again. The direction angle is calculated according to the position change here. A linear distance △d is set, POS₀ is used as an original point, a distance between the current pos and POS₀ is calculated in real time, when the distance at the first time is larger than or equal to △d, the true north direction angle of the current pos with respect to POS₀ is calculated, and the direction angle is used as an input to acquire the up and down results by means of the direction calculation method A; and at the same time, the current pos is used as a new original point, and the above calculation is repeated. When the up and down results of three consecutive △d are the same, it can be determined that it is the current locomotive operation direction, and the original up and down directions DIR₀ are kept unchanged in other cases.

Different calculation methods are used for calculation of the locomotive displacement in the different states.

The displacement calculation method A in FIG. 1 is as follows: one locomotive operation direction is determined as a positive displacement direction and another locomotive operation direction is determined as a negative direction, a displacement change △s=v·△t in a single cycle is calculated, and in combination with the locomotive operation direction, a displacement is acquired by adding or subtracting on the basis of an original displacement.

The displacement calculation method B in FIG. 1 is as follows: a distance △s between the current pos and POS₀ is calculated in real time, at the same time, the true north direction angle of the current pos with respect to POS₀ is calculated, and the direction angle is used as an input to acquire the up and down results by means of the direction calculation method A. According to the direction, the displacement is acquired by adding or subtracting on the basis of original S₀.

### DETAILED DESCRIPTION OF THE EMBODIMENTS

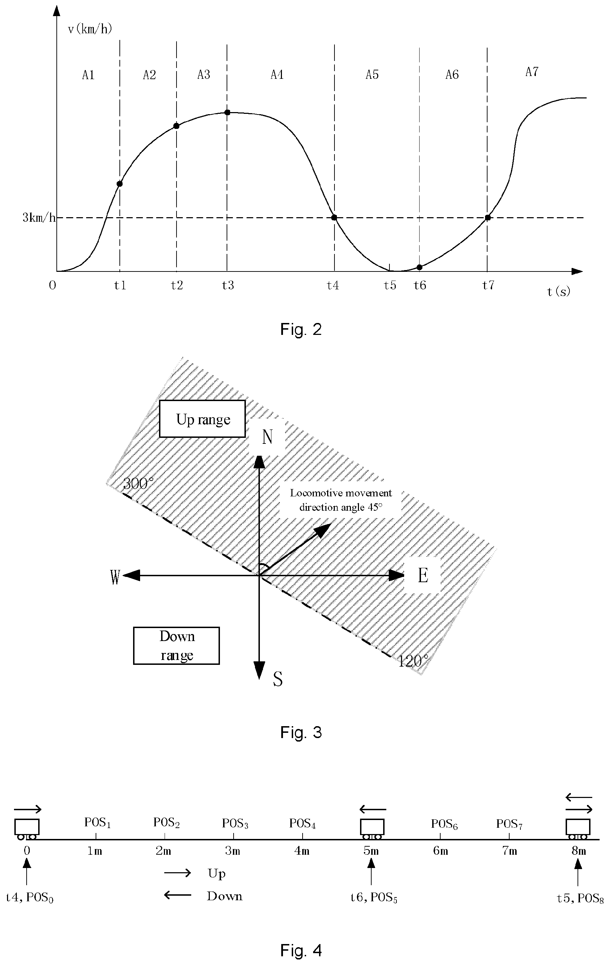

The calculation methods for the locomotive operation speed, direction and displacement of the solution are further illustrated below by means of one example. FIG. 2 is an actual speed change diagram of a section of locomotive operation. Assuming V_{b}=3 km/h, T_{c}=5 s and △d=1 m, the direction in the range of 120-300 degrees in the true north clockwise direction of a certain line (station) is the down direction, the rest is the up direction, the displacement is added in the forward direction in the up direction and is subtracted in the negative direction in the down direction, the locomotive operates in the up direction within the time period of 0-t5, a handle is inverted for reversing after t5, and the locomotive operates in the down direction.

In an area A1, the satellite positioning module fails to perform positioning, and the locomotive starts to move from a still state, with the speed exceeding 3 km/h; in this area, the locomotive is in the "initial state", with the speed, direction and displacement unknown (set to be 0); and
at the moment t1, the satellite positioning is valid and the current speed is greater than 3 km/h, the locomotive is in the "credible speed state", in an area A2, the speed is converted from the satellite positioning data, the operation direction is calculated by means of the direction angle, and the displacement is accumulated by v·△ t by segments. The determination of the operation direction is as shown in FIG. 3, it is assumed that the locomotive moves along the direction angle of 45 degrees in the area A2, and then the locomotive operation direction can be determined as the up direction.

At the moment t2, the satellite positioning fails, the locomotive enters the "invalid satellite positioning state", at this moment, the speed is unknown, the original up direction is kept, and meanwhile, the last valid position information (longitude and latitude) POS₀ before the satellite failure is recorded. If the satellite positioning is not restored within the next 5s, the speed, direction and displacement calculation are considered as invalid, and the locomotive returns to the initial state. It is assumed here that t3-t2<5s, in an area A3, the locomotive will always be in the "invalid satellite positioning state", and the displacement will be kept at the position value S₀ before the failure and will not be updated temporarily.

The satellite positioning is restored at the moment t3, at this moment, the calculated speed is greater than 3 km/h, and the locomotive will return to the "credible speed state". At this moment, the speed and the direction can be directly calculated by means of the satellite positioning data, but the displacement value needs to be compensated once: the true north direction angle of pos with respect to POS₀ can be calculated by means of the longitude and latitude coordinates pos of the locomotive at the moment t3 and the POS₀ longitude and latitude information recorded before, assuming the calculated angle is 50 degrees, it can be determined according to FIG. 3 that the locomotive still moves in the up direction within the satellite failure time, and then the distance d between pos and POS₀ is directly figured out to compensate the displacement: s=S₀+d. In the whole area A4, the speed, the direction and the displacement value are calculated in the same method as in the area A2.

At the moment t4, the speed drops below 3 km/h, the locomotive will be in the "low speed state", the current position is recorded as POS₀, the displacement is S₀, and the direction is the up direction. FIG. 4 is the schematic diagram of the locomotive positions in areas A5 and A6. Assuming that the locomotive moves linearly within the time periods of t4-t7, the straight line in the figure represents the operation line of the locomotive. At the moment t4, the locomotive is in the POS₀ position; at the moment t5, the locomotive operates to the POS₈ position in the up direction and moves immediately in the down direction for return by inverting the handle; and at the moment t6, the locomotive moves to the POS₅ position.

The determination process of the locomotive operation direction is described below. Returning to the moment t4, when the locomotive moves to the POS₁ position in the up direction along the timeline, the distance from POS₀ reaches 1 m, at this moment, the true north direction angle of POS₁ with respect to POS₀ is calculated, and then it can be known that this process is in the up direction in conjunction with the line data; when the locomotive reaches POS₂, the true north direction angle of POS₂ with respect to POS₁ is calculated, the same result is obtained, and the result is the same at POS₃. At this moment, three consecutive up directions are obtained, and it can be determined that the operation direction of the locomotive at this position is the up direction and is consistent with the current direction (from the direction recorded at POS₀). Three identical consecutive directions can always be guaranteed in this period and are all up directions until POS₈. The handle is inverted and the locomotive operates in the down direction at the position POS₈. When the locomotive operates to the position POS₇, the direction from POS₈ to POS₇ is the down direction according to the above calculation method; however, since the condition of three consecutive identical directions is not met, the change of the operation direction cannot be determined at this moment, and the direction is still determined as the up direction. Until the moment t6, the locomotive moves to POS₅ in the down direction, the three consecutive directions are down directions at this moment, and then the locomotive operation direction is determined as the down direction. It is undeniable that there is a certain delay in the perception of the change of the operation direction in this scenario, but this method can filter out the adverse effects caused by jump of the satellite positioning. The locomotive continues to operate in the down direction, and after the locomotive reaches POS₃, it is assumed that the wrong position information that the locomotive is located at POS₄ is provided due to an error of the satellite positioning. It can be figured out that the direction from POS₄ to POS₃ is the up direction according to the above method; however, since the condition of three consecutive identical directions is not met, the current locomotive operation direction is still considered to be the down direction, and the jump of the operation direction due to the error of the satellite positioning is avoided.

The displacement is directly calculated by means of the position information. At this moment, the locomotive reaches the position POS₃ and operates in the down direction. At this moment, the reference position and the displacement are POS₀ and S₀ recorded at the moment t4, the distance between POS₃ and POS₀ is calculated directly to obtain the result of 3 m, and the reference displacement S₀ is compensated by the distance to obtain the current displacement value. Adding or subtraction is not related to the current operation direction of the locomotive, but is related to the relative direction between POS₃ and POS₀. It can be figured out that the direction is the up direction, and thus the displacement s=S₀+3.

After the moment t7, the speed will be greater than or equal to 3 km/h, the locomotive returns to the "credible speed state", and the calculation method in an area A7 is the same as those in the areas A2 and A4, which will not be repeated here.

## Claims

1. A locomotive operation state detection method based on satellite positioning, the method comprising: installing a satellite positioning module on a locomotive, and acquiring real-time position information, speed information and direction angle information of the locomotive by analyzing satellite positioning data output by the satellite positioning module; and dividing locomotive operation states into an initial state, an invalid satellite positioning state, a low speed state and a credible speed state according to whether the positioning data is valid and according to a received speed value, wherein the credible speed state is a case when the satellite positioning is valid and a locomotive speed is not lower than a critical speed, wherein in the credible speed state, the speed information of the locomotive is taken from the satellite positioning data, the direction information of the locomotive is acquired through direction calculation A, and displacement information of the locomotive is acquired through displacement calculation A, wherein in the low speed state, the speed value in this state is taken as a reference, and the operation direction and displacement of the locomotive are calculated by means of the position change, the operation direction is acquired through direction calculation B, and the displacement is acquired through displacement calculation B,
**characterized in that**,
the specific process of the direction calculation B comprises:
calculating the direction angle according to the position change; setting a linear distance △d, the current position being pos, POS0 representing the position information to be compared, an initial value being a position at the time when entering the low speed state, calculating a distance between the current pos and POS0 in real time, when the distance at the first time is larger than or equal to △d, calculating the true north direction angle of the current pos with respect to POS0, and using the direction angle as an input to acquire the up and down results by means of the direction calculation method A; at the same time, taking the current pos as new POS0, and repeating the above calculation circularly; and
when the up and down results of three consecutive Δd are the same, determining that it is the current locomotive operation direction, and keeping the original operation direction unchanged in other cases.

2. The method according to claim 1, wherein in the initial state, a locomotive speed, an operation direction and a displacement value are all unknown, and the displacement value is taken as 0.

3. The method according to claim 1, wherein the specific process of the direction calculation A comprises:
acquiring the direction angle information of locomotive movement by analyzing the satellite positioning data, determining direction angle intervals in up and down directions within a set position range according to actual line and station conditions, and determining the up and down directions, in which the locomotive operates currently, by judging the interval where the direction angle is located.

4. The method according to claim 1, wherein the specific process of the displacement calculation A comprises:
determining one locomotive operation direction as a positive displacement direction and another locomotive operation direction as a negative direction, calculating a displacement change △s=v×△t in a single cycle, and in combination with the locomotive operation direction, acquiring a displacement by adding or subtracting on the basis of an original displacement, where v is the locomotive speed and △t is the single cycle.

5. The method according to claim 1, wherein when the satellite positioning state is changed from a normal state to an invalid state, the invalid satellite positioning state may be enabled, and in this state, the speed is unknown, and the direction and displacement remain the last valid values.

## Patentansprüche

1. Verfahren zum Erkennen eines Betriebszustands einer Lokomotive basierend auf Satellitenpositionierung, wobei das Verfahren Folgendes umfasst: Installieren eines Satellitenpositionierungsmoduls auf einer Lokomotive und Beziehen von Echtzeitpositionsinformationen, Geschwindigkeitsinformationen und Richtungswinkelinformationen der Lokomotive, indem Satellitenpositionierungsdatenausgabe von dem Satellitenpositionierungsmodul analysiert wird; und Unterteilen von Betriebszuständen der Lokomotive in einen Anfangszustand, einen ungültigen Satellitenpositionierungszustand, einen Niedergeschwindigkeitszustand und einen zuverlässigen Geschwindigkeitszustand gemäß dessen, ob die Positionierungsdaten gültig sind, und gemäß einem empfangenen Geschwindigkeitswert, wobei der zuverlässige Geschwindigkeitszustand ein Fall ist, in dem die Satellitenpositionierung gültig ist und eine Geschwindigkeit der Lokomotive nicht niedriger als eine kritische Geschwindigkeit ist, wobei in dem zuverlässigen Geschwindigkeitszustand die Geschwindigkeitsinformationen der Lokomotive aus den Satellitenpositionierungsdaten genommen werden, die Richtungsinformationen der Lokomotive durch Richtungsberechnung A erhalten werden und Verschiebungsinformationen der Lokomotive durch Verschiebungsberechnung A erhalten werden, wobei in dem Niedergeschwindigkeitszustand der Geschwindigkeitswert in diesem Zustand als eine Referenz herangezogen wird und die Betriebsrichtung und Verschiebung der Lokomotive mittels der Positionsänderung berechnet werden, die Betriebsrichtung durch Richtungsberechnung B erhalten wird und die Verschiebung durch Verschiebungsberechnung B erhalten wird,
**dadurch gekennzeichnet, dass**
der spezifische Prozess der Richtungsberechnung B Folgendes umfasst:
Berechnen des Richtungswinkels gemäß der Positionsänderung; Festlegen einer linearen Distanz △d, wobei die aktuelle Position pos ist, POS0 die zu vergleichenden Positionsinformationen darstellt, ein Anfangswert eine Position zu dem Zeitpunkt ist, wenn in den Niedergeschwindigkeitszustand eingetreten wird, Berechnen einer Distanz zwischen der aktuellen pos und POS0 in Echtzeit, wenn die Distanz zum ersten Zeitpunkt größer als oder gleich Δd ist, Berechnen des wahren Nordrichtungswinkels der aktuellen pos in Bezug auf POS0 und Verwenden des Richtungswinkels als eine Eingabe, um die Auf- und Ab-Ergebnisse mittels des Richtungsberechnungsverfahrens A zu erhalten; gleichzeitig Heranziehen der aktuellen pos als neue POS0 und zirkuläres Wiederholen der obigen Berechnung; und
wenn die Auf- und Ab-Ergebnisse drei aufeinanderfolgender Δd dieselben sind, Bestimmen, dass es die aktuelle Betriebsrichtung der Lokomotive ist und andernfalls Beibehalten der ursprünglichen Betriebsrichtung als unverändert.

2. Verfahren nach Anspruch 1, wobei in dem Anfangszustand eine Geschwindigkeit, eine Betriebsrichtung und ein Verschiebungswert der Lokomotive jeweils unbekannt sind und der Verschiebungswert als 0 angenommen wird.

3. Verfahren nach Anspruch 1, wobei der spezifische Prozess der Richtungsberechnung A Folgendes umfasst:
Erhalten der Richtungswinkelinformationen einer Bewegung der Lokomotive, indem die Satellitenpositionierungsdaten analysiert werden, Richtungswinkelintervalle in Aufwärts- und Abwärtsrichtungen innerhalb einer festgelegten Positionsspanne gemäß tatsächlichen Strecken- und Stationsbedingungen bestimmt werden und die Aufwärts- und Abwärtsrichtung bestimmt werden, in denen die Lokomotive aktuell arbeitet, indem das Intervall beurteilt wird, in dem sich der Richtungswinkel befindet.

4. Verfahren nach Anspruch 1, wobei der spezifische Prozess der Verschiebungsrichtung A Folgendes umfasst:
Bestimmen einer Betriebsrichtung der Lokomotive als eine positive Verschiebungsrichtung und einer anderen Betriebsrichtung der Lokomotive als eine negative Richtung, Berechnen einer Verschiebungsänderung Δs=v×Δt in einem einzelnen Zyklus, und in Kombination mit der Betriebsrichtung der Lokomotive, Erhalten einer Verschiebung, indem auf der Basis einer ursprünglichen Verschiebung, wo v die Geschwindigkeit der Lokomotive ist und Δt der einzelne Zyklus ist, addiert oder subtrahiert wird.

5. Verfahren nach Anspruch 1, wobei, wenn der Satellitenpositionierungszustand von einem normalen Zustand zu einem ungültigen Zustand geändert wird, der ungültige Satellitenpositionierungszustand aktiviert werden kann und in diesem Zustand die Geschwindigkeit unbekannt ist und die Richtung und Verschiebung die letzten gültigen Werte bleiben.

## Revendications

1. Procédé de détection d'état de fonctionnement de locomotive sur la base d'un positionnement par satellite, le procédé comprenant : l'installation d'un module de positionnement par satellite sur une locomotive, et l'acquisition en temps réel d'informations de position, d'informations de vitesse et d'informations d'angle de direction de la locomotive par l'analyse de données de positionnement par satellite délivrées par le module de positionnement par satellite ; et la division d'états de fonctionnement de locomotive en un état initial, un état de positionnement par satellite non valide, un état de basse vitesse et un état de vitesse crédible selon que les données de positionnement sont valides ou non et en fonction d'une valeur de vitesse reçue, dans lequel l'état de vitesse crédible est un cas dans lequel le positionnement par satellite est valide et une vitesse de locomotive n'est pas inférieure à une vitesse critique, dans lequel, dans l'état de vitesse crédible, les informations de vitesse de la locomotive proviennent des données de positionnement par satellite, les informations de direction de la locomotive sont acquises par un calcul de direction A, et les informations de déplacement de la locomotive sont acquises par un calcul de déplacement A, dans lequel, dans l'état de basse vitesse, la valeur de vitesse dans cet état est prise comme référence, et la direction de fonctionnement et le déplacement de la locomotive sont calculés au moyen du changement de position, la direction de fonctionnement est acquise par un calcul de direction B, et le déplacement est acquis par un calcul de déplacement B,
**caractérisé en ce que**
le processus spécifique du calcul de direction B comprend :
le calcul de l'angle de direction en fonction du changement de position ; la définition d'une distance linéaire Δd, la position courante étant pos, POSO représentant les informations de position à comparer, une valeur initiale étant une position au moment de l'entrée dans l'état de basse vitesse, le calcul d'une distance entre la pos courante et POSO en temps réel, la première fois que la distance est supérieure ou égale à Δd, le calcul de l'angle de direction du nord géographique de la pos courante par rapport à POSO, et l'utilisation de l'angle de direction comme entrée pour acquérir les résultats vers le haut et vers le bas au moyen du procédé de calcul de direction A ; en même temps, la prise de la pos courante comme nouvelle POSO, et la répétition du calcul ci-dessus de manière circulaire ; et
lorsque les résultats vers le haut et vers le bas de trois Δd consécutifs sont les mêmes, la détermination qu'il s'agit de la direction de fonctionnement de locomotive courante, et le maintien de la direction de fonctionnement initiale inchangée dans d'autres cas.

2. Procédé selon la revendication 1, dans lequel, dans l'état initial, une vitesse de locomotive, une direction de fonctionnement et une valeur de déplacement sont toutes inconnues, et la valeur de déplacement est prise comme 0.

3. Procédé selon la revendication 1, dans lequel le processus spécifique du calcul de direction A comprend :
l'acquisition des informations d'angle de direction de mouvement de locomotive par l'analyse des données de positionnement par satellite, la détermination d'intervalles d'angle de direction dans des directions vers le haut et vers le bas à l'intérieur d'une plage de position définie en fonction de conditions de lignes et de gares réelles, et la détermination des directions vers le haut et vers le bas du fonctionnement courant de la locomotive par le jugement de l'intervalle dans lequel se trouve l'angle de direction.

4. Procédé selon la revendication 1, dans lequel le processus spécifique du calcul de déplacement A comprend :
la détermination d'une direction de fonctionnement de locomotive comme direction positive de déplacement et d'une autre direction de fonctionnement de locomotive comme direction négative, le calcul d'un changement de déplacement Δs=v×Δt dans un cycle unique, et, en combinaison avec la direction de fonctionnement de locomotive, l'acquisition d'un déplacement par addition ou soustraction sur la base d'un déplacement initial, où v est la vitesse de locomotive et Δt est le cycle unique.

5. Procédé selon la revendication 1, dans lequel, lorsque l'état de positionnement par satellite est changé d'un état normal à un état non valide, l'état de positionnement par satellite non valide peut être activé et, dans cet état, la vitesse est inconnue, et la direction et le déplacement conservent les dernières valeurs valides.
